Europäisches Patentamt

European Patent Office

Office européen des brevets

(11) Veröffentlichungsnummer: **0 162 292**
A1

## (12) EUROPÄISCHE PATENTANMELDUNG

(21) Anmeldenummer: 85104701.9

(22) Anmeldetag: 18.04.85

(51) Int. Cl.⁴: **B 62 D 63/06**
B 60 P 3/10, B 60 P 1/52

(30) Priorität: 22.05.84 DE 3419026

(43) Veröffentlichungstag der Anmeldung:
27.11.85 Patentblatt 85/48

(84) Benannte Vertragsstaaten.
AT BE CH DE FR GB IT LI NL SE

(71) Anmelder: Jägers, Leopold
Rudolf-Diesel-Strasse 1
D-5350 Euskirchen(DE)

(72) Erfinder: Jägers, Leopold
Rudolf-Diesel-Strasse 1
D-5350 Euskirchen(DE)

(74) Vertreter: Patentanwaltsbüro Cohausz & Florack
Postfach 14 01 47
D-4000 Düsseldorf 1(DE)

(54) Kraftfahrzeuganhänger zum Transport von abnehmbaren Aufbauten.

(57) Die Erfindung betrifft einen Kraftfahrzeuganhänger, insbesondere PKW-Anhänger, zum Transport von leicht abnehmbaren und austauschbaren Aufbauten. In rückwärtiger Richtung verlaufen zwei, vorne miteinander verbundene, etwa waagerechte Profile (3) auseinander und im Bereich der Achseinheiten (7) in waagerechter paralleler Weise nach hinten. Vor und hinter den Achseinheiten sind die Profile durch Querprofile (5) verbunden, und zwischen den Querrohren befinden sich Radschutzhauben (8). Die oberen Flächen der Radschutzhauben bilden Auflagen (9), welche die Last der Aufbauten (12) unmittelbar über die Federung (10) auf die Räder (11) übertragen.

Fig.2

EP 0 162 292 A1

# COHAUSZ & FLORACK

**0162292**

## PATENTANWALTSBÜRO

SCHUMANNSTR. 97 D-4000 DÜSSELDORF 1

Telefon: (02 11) 68 33 46          Telex: 0858 6513 cop d

| PATENTANWÄLTE: |
|---|

Dipl.-Ing. W. COHAUSZ · Dipl.-Ing. R. KNAUF · Dipl.-Ing. H. B. COHAUSZ · Dipl.-Ing. D. H. WERNER

- 1 -

17.4.85

Leopold Jägers

Rudolf-Diesel-Str. 1

5350 Euskirchen

Kraftfahrzeuganhänger zum Transport von abnehmbaren Aufbauten

Die Erfindung betrifft einen Kraftfahrzeuganhänger, insbesondere PKW-Anhänger, zum Transport von leicht abnehmbaren und austauschbaren Aufbauten bzw. Lasten, z.B. Boote, Wohnwagen, Gepäckbehälter oder alle Arten von Behältern für den Gewerbebetrieb, wobei in rückwärtiger Richtung zwei vorne miteinander verbundene, etwa waagerechte Profile auseinander verlaufen und im Bereich der Achseinheiten in waagerechter paralleler Weise nach hinten verlaufen, und diese vor und hinter den Achseinheiten durch Querprofile verbunden sind und sich zwischen den Querrohren Radschutzhauben befinden.

Es sind Anhänger bekannt, die es erlauben, z.B. ein Boot so auf ihnen zu befestigen, daß es leicht abnehmbar ist. Hierbei ist der Anhänger so ausgelegt, daß das Boot z.B. über Rollen auf den Anhänger gezogen und dort befestigt werden kann. Hierzu werden die unterschiedlichsten Arten

44 098
HC/Be

von Achsen und Federungen verwendet. Ebenso gibt es viele Arten von Befestigungen des Bootes auf dem Anhänger.

Durch die hierbei gebräuchliche Einzelkonstruktion wird jedoch viel Platz gebraucht und damit aufwendige Konstruktionsteile benötigt, die entsprechende Kosten verursachen und vor allem ein hohes Gewicht haben.

Aufgabe der Erfindung ist es, eine Kombination zwischen dem Chassis und dem Aufbau des Anhängers so zu gestalten, daß eine wenig Platz beanspruchende, einfache und leichte Konstruktion entsteht.

Diese Aufgabe wird erfindungsgemäß dadurch gelöst, daß die oberen Flächen der Radschutzhauben Auflagen bilden, welche die Last der Aufbauten unmittelbar über die Federung auf die Räder übertragen.

Dies ermöglicht eine ideale Kombination zwischen einem Anhängerchassis und den verschiedenartigen Aufbauten, wie z.B. Boot, Wohnwagen, Gepäckbehältern und alle Arten von Behältern für den Gewerbebetrieb angesehen werden können, hinsichtlich ihrer Zweckmäßigkeit und vielseitigen Verwendungsmöglichkeit.

Durch die besondere Ausgestaltung von Chassis und Aufbauten wird eine große gemeinsame Stabilität erreicht, was zu einer enormen Gewichtseinsparung der gesamten Konstruktion von z.B. 30% gegenüber herkömmlicher Konstruktion führt.

Es wird eine dreipunktartige Aufnahme der Last ermöglicht, welche gleichzeitig ein Verschieben derselben in Längsrichtung zum Zwecke der Ausbalancierung zuläßt. Diese Ausbalancierung ist nötig, da die Last wegen einer maximal zulässigen Auflagekraft auf die Anhängerkupplung des Zugfahrzeuges, auf die Anhängerkupplung und die Räder des Anhängers entsprechend verteilt werden muß.

Ein Verrutschen der Last im Betrieb wird durch Befestigungsvorrichtungen, zur schnelleren Handhabung vornehmlich durch Schnellverschlußeinrichtungen, verhindert, welche sich nicht nur an der vorderen Auflage, sondern auch an den seitlichen Auflagen befinden können.

Der Anhänger baut bei geringem Gewicht und einfachster Konstruktion besonders klein, da die Längslager direkt oberhalb der Räder angeordnet sind. Hierdurch wird zusätzlich der Vorteil erreicht, daß die auf die Längslager einwirkende Last direkt auf die Achse(n) übertragen wird, ohne weitere Bauteile des Anhängers zu belasten. Damit können die Profile des Anhängers von kleinem Querschnitt sein.

Da die Längslager Längsvorsprünge des jeweiligen Aufbaus untergreifen und damit der Abstand der Längslager voneinander gesichert ist, ist es nicht erforderlich, eine zusätzliche Querverbindung zwischen den Längslagern anzuordnen. Vielmehr wird die Steifigkeit des Aufbaus für diesen Halt genutzt.

Die Last der Aufbauten wird über winkelförmige Ausbuchtungen in diesen übernommen, und diese Last wird unmittelbar über die Federung auf die Räder übertragen. Diese Kombination von Chassis und Aufbau bildet eine Verbindung, die durch eine entsprechende Ausgestaltung des Chassis und der Aufbauten leicht lösbar ist und somit ein leichtes Abnehmen der Aufbauten vom Chassis und ein leichtes Auswechseln von verschiedenen Aufbauten ermöglicht.

Die beiden seitlichen Auflagen ermöglichen zusammen mit einer vorderen Auflage eine dreipunktartige Übernahme der Last des Aufbaues. Durch eine entsprechende Ausgestaltung der winkelförmigen Ausbuchtungen über eine bestimmte Länge und durch eine verschiebbare Anordnung der vorderen Auflage im vorderen parallelen Teil der Deichsel ist der Aufbau über dem Chassis in Fahrtrichtung verschiebbar angeordnet. Dadurch wird eine wegen der maximal zulässigen Auflagekraft auf die Anhängerkupplung notwendige Verteilung der Last auf die Anhängerkupplung und die Räder des Anhängers ermöglicht.

Vorteilhafte Ausgestaltungen der Erfindung sind in den Unteransprüchen aufgeführt.

Ausführungsbeispiele der Erfindung sind in den Zeichnungen dargestellt und werden im folgenden näher beschrieben. Es zeigen:

Fig. 1      eine Seitenansicht einer ersten einachsigen Ausführungsform mit aufliegender Last;

Fig. 2      eine Draufsicht der Ausführungsform nach Fig. 1;

Fig. 3      eine Vorderansicht der Ausführungsform nach Fig. 1;

Fig. 4      eine Seitenansicht nach Fig. 1 ohne Last;

Fig. 5      eine Draufsicht der Ausführungsform nach Fig. 4;

Fig. 6      eine Vorderansicht der Ausführungsform nach Fig.4;

Fig. 7      eine Seitenansicht mit seitlich überkragender Last;

0162292

Fig. 8      eine Vorderansicht nach Fig. 7;

Fig. 9      eine Seitenansicht mit einem aufliegenden Verkaufsstand;

Fig. 10     eine Vorderansicht nach Fig. 9;

Fig. 11     einen Viehtransporter;
und 12

Fig. 13
und 14      einen Flüssigkeitsbehälter mit Adapter;

Fig. 15
und 16      einen offenen Aufbau für allgemeine Zwecke;

Fig. 17
und 18      einen schwimmfähigen bootsförmigen Behälter;

Fig. 19
und 20      einen geschlossenen Aufbau für allgemeine Zwecke;

Fig. 21
und 22      eine schwimmfähige Wohnkabine;

Fig. 23
und 24      einen Werkstattwagen;

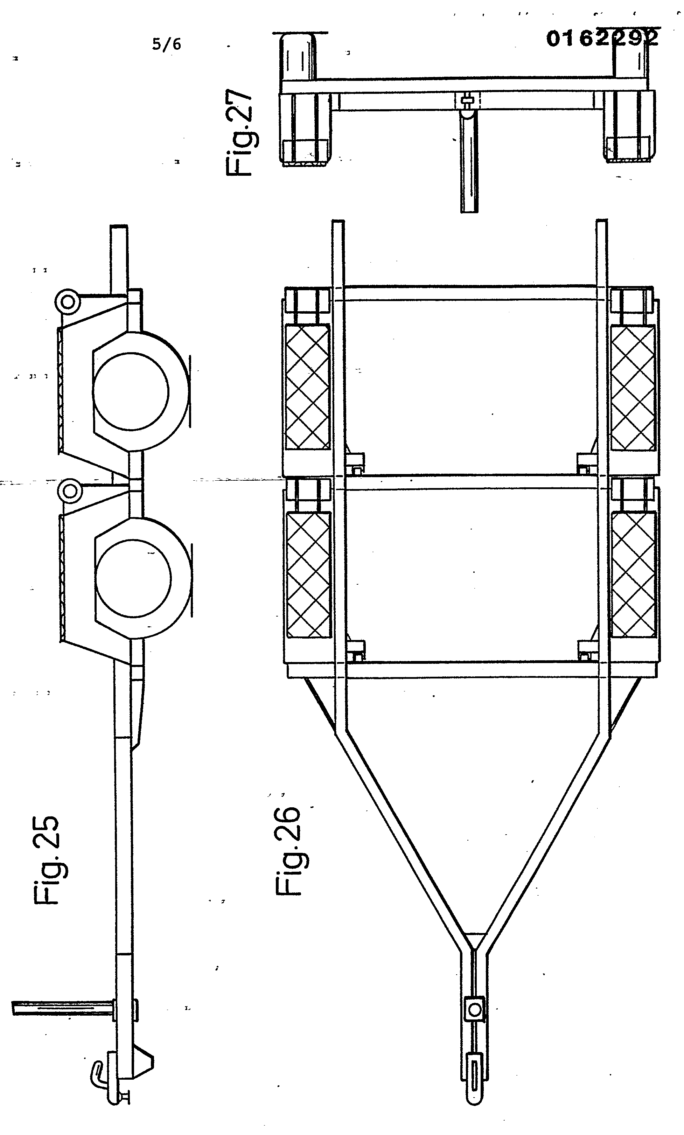

Fig. 25     eine Seitenansicht eines zweiachsigen Chassis;

Fig. 26     eine Draufsicht der Ausführungsform nach Fig.25;

Fig. 27     eine Vorderansicht der Ausführungsform nach
            Fig. 25;

Fig. 28

und 29    einen Transporter insbesondere für Segelflugzeuge;

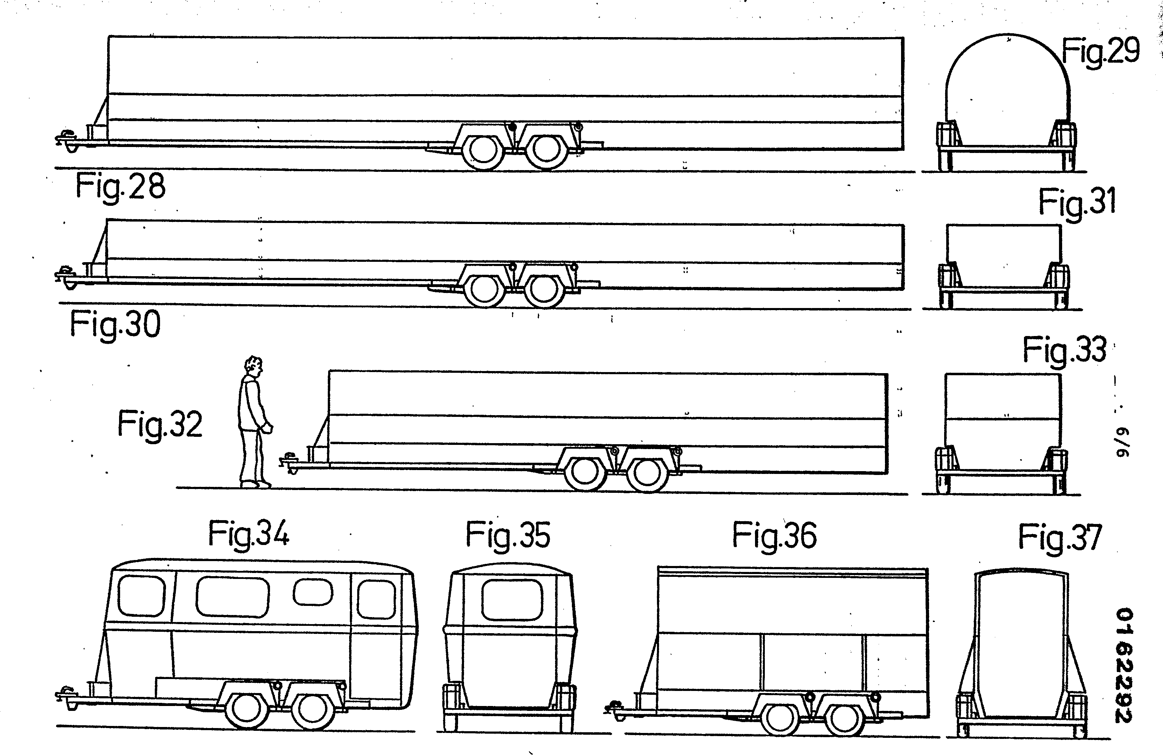

Fig. 30 und 31    einen offenen Transporter für Langgut;

Fig. 32

und 33    einen geschlossenen Transporter für Langgut;

Fig. 34

und 35    einen Wohnwagen;

Fig. 36

und 37    einen Pferdeanhänger

Der Kraftfahrzeuganhänger weist zwei zweifach gebogene Profile 3 auf, die von Stahlrohren rechteckigen oder kreisförmigen Querschnitts gebildet sind. Im vorderen Bereich sind diese beiden Profile 3 nahe beieinander in Anhängerlängsrichtung parallel zueinander geführt und aneinander befestigt und bilden dort die Deichsel. An ihren vorderen Enden ist die Kupplung, insbesondere Kugelkupplung 1 befestigt. Hinter der Deichsel sind die Profile weiterhin waagerecht, aber in einem Winkel von $\alpha$ = ca. 30 Grad nach außen abgebogen, um nach Erreichen des etwa größten Abstandes der Profile 1, 2 voneinander um den gleichen Winkel erneut abgebogen zu sein, so daß in diesem Bereich die Profile wiederum parallel zueinander liegen und nach hinten verlaufen. In diesem Bereich sind an den Profilen 3 außen aus Stahlblech gefertigte stabile Radkästen 8 befestigt, die jeweils eine waagerechte ebene Oberseite größerer Länge als Breite besitzen, die insbesondere rechteckförmig ist. Diese Oberseiten bilden in Fahrtrichtung angeordnete, zueinander parallele waagerechte seitliche Längslager bzw. Auflagen 9 für die Aufbauten.

Die Profile 3 sind vor und hinter den Radkästen 8 miteinander durch Querprofile 5 verbunden. Der Anhänger erhält zusätzlich eine Quersteifigkeit durch Halt der Längslager 9 an dem Aufbau. Der Aufbau weist hierzu seitliche, untere, zueinander parallele, insbesondere winkelförmige Einbuchtungen oder Längsvorsprünge 14 auf, die zueinander im selben Abstand angeordnet sind wie die beiden Längslager 9. Die Einbuchtungen 14 bilden somit untere seitliche Auflagen, die von den Längslagern 9 untergriffen werden. Eine zusätzliche Stabilität und Sicherheit der Lagerung wird hierbei dadurch erreicht, daß die Längslager des Aufbaus im Querschnitt konkav entsprechend dem Querschnitt der Profile 3 gewölbt bzw. ausgehöhlt sind.

An der Stelle, an der die Profile 3 ihre maximale Breite erreicht haben, insbesondere in Höhe des vorderen Querprofils 5, ist insbesondere am Querprofil jeweils die Schwinge einer Verbundlenkerachse angelenkt, die zwei Räder 11 an den Außenseiten trägt. Die Radachsen sind hierbei über etwa senkrecht angeordnete Federbeine mit den Radkästen verbunden.

Im Bereich der Deichsel ist auf den Profilen 3 eine senkrechte Stütze 13 befestigt, die in Längsrichtung des Anhängers verschiebbar ist und die die vordere Auflage (Lager) des Aufbaus bildet. Hierdurch wird eine Dreipunktlagerung des Aufbaus erzielt.

Hinter den Längslagern 9 sind Rollen 15 befestigt, über die die seitlichen Längsvorsprünge der Aufbauten gleiten. Anstelle dieser Rollen kann auch eine Kunststoffauflage die Gleitwirkung verbessern.

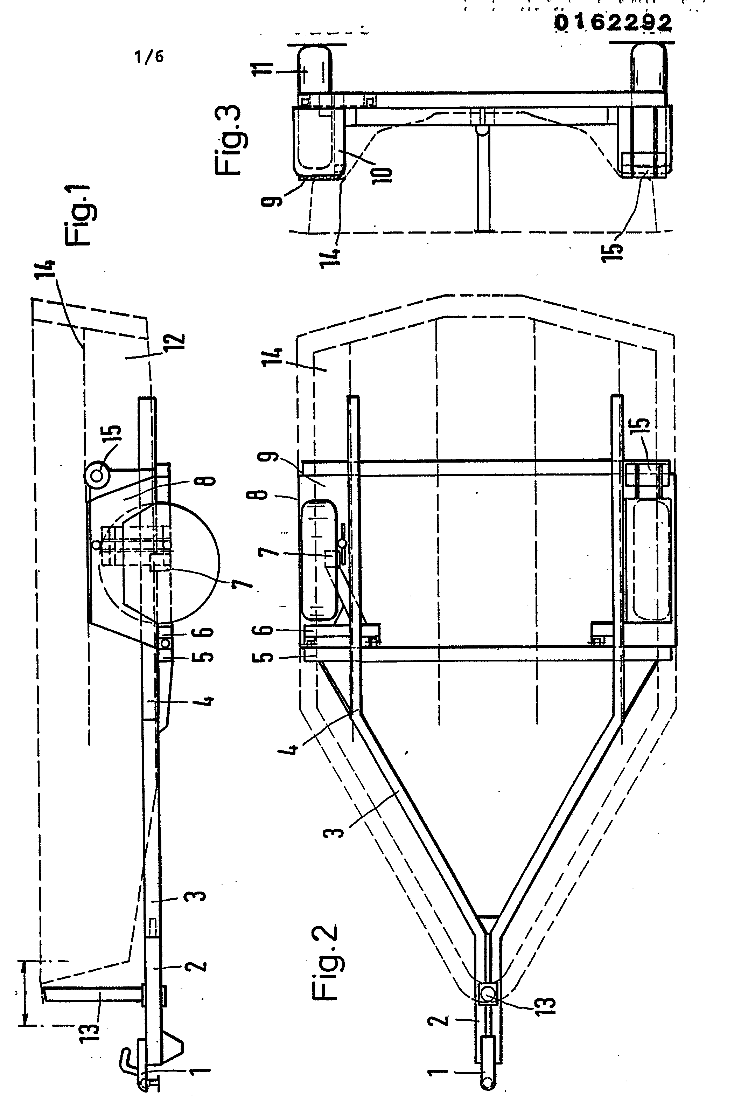

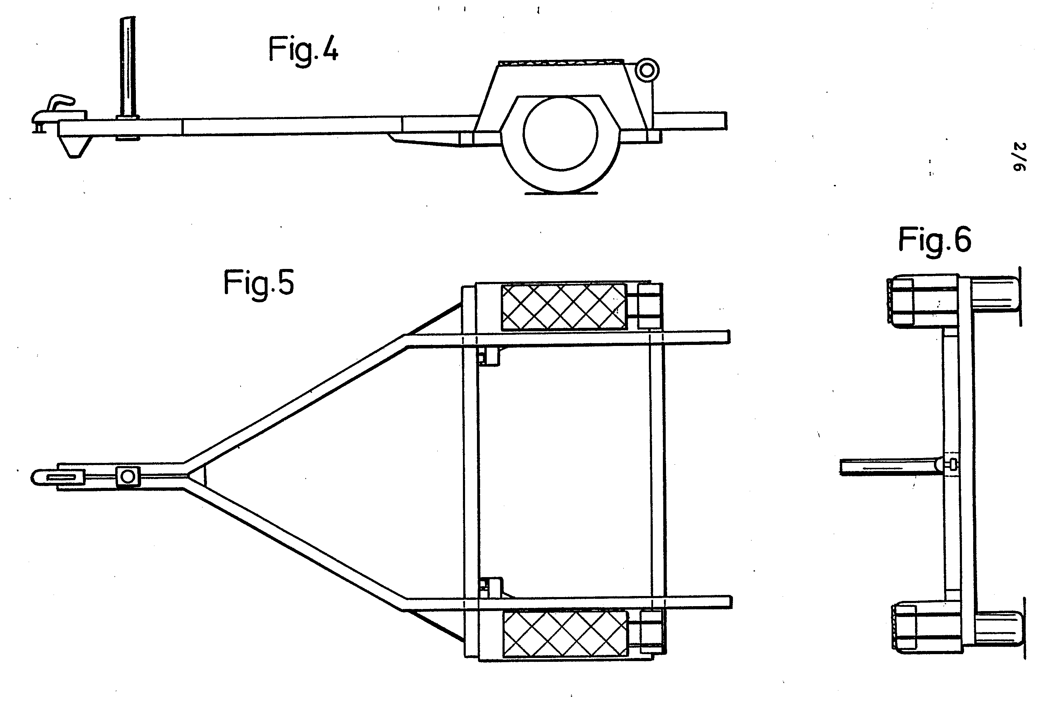

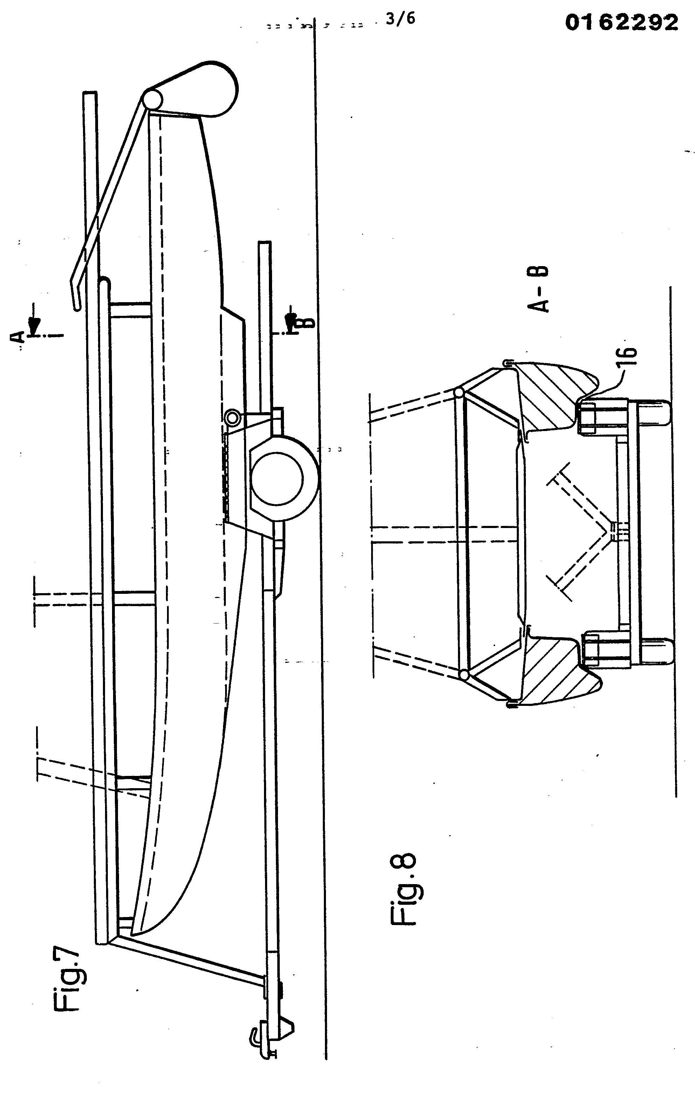

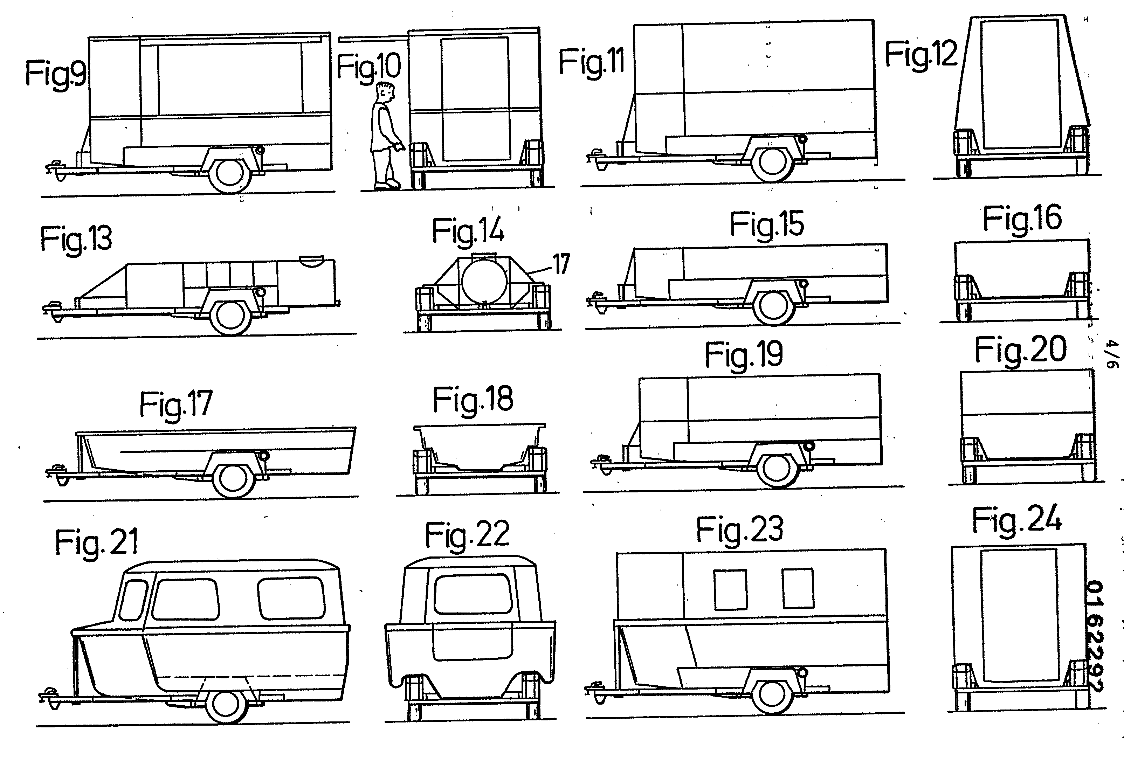

Die in den Figuren 25 bis 37 dargestellten Ausführungsbeispiele unterscheiden sich von denen nach Fig. 1 bis 24 dadurch, daß zwei Achsen angeordnet sind und jedes der vier
Räder mit einem Radkasten überdeckt ist. Hierbei bildet
jeder Radkasten eine obere Auflage 9 bzw. ein Längslager.
Zwischen den beiden Achsen sind die Profile 3 durch ein
weiteres Querprofil miteinander verbunden.

Der Anhänger kann die verschiedensten Aufbauten aufnehmen,
die jeweils mit ihrer Unterseite sehr niedrig auf dem Anhänger angeordnet sind. Da die Aufbauten direkt auf der
Oberseite der Radkästen aufliegen, ist der Abstand zwischen
dem Aufbau und der Radoberseite minimal, wodurch eine sehr
geringe Gesamthöhe des Aufbaus und ein niedriger Schwerpunkt erreicht wird.

**COHAUSZ & FLORACK**  0162292

PATENTANWALTSBÜRO

SCHUMANNSTR. 97 D-4000 DÜSSELDORF 1

Telefon: (0211) 683346          Telex: 0858 6513 cop d

PATENTANWÄLTE:

Dipl.-Ing. W. COHAUSZ · Dipl.-Ing. R. KNAUF · Dipl.-Ing. H. B. COHAUSZ · Dipl.-Ing. D. H. WERNER

– 9 –

17.4.85

Ansprüche

1. Kraftfahrzeuganhänger, insbesondere PKW-Anhänger, zum Transport von leicht abnehmbaren und austauschbaren Aufbauten bzw. Lasten, z.B. Boote, Wohnwagen, Gepäckbehälter oder alle Arten von Behältern für den Gewerbebetrieb, wobei in rückwärtiger Richtung zwei vorne miteinander verbundene, etwa waagerechte Profile (3) auseinander verlaufen und im Bereich der Achseinheiten (7) in waagerechter paralleler Weise nach hinten verlaufen (4) und diese vor und hinter den Achseinheiten durch Querprofile verbunden sind und sich zwischen den Querrohren Radschutzhauben (8) befinden, d a d u r c h   g e k e n n - z e i c h n e t , daß die oberen Flächen der Radschutzhauben Auflagen (9) bilden, welche die Last der Aufbauten (12) unmittelbar über die Federung (10) auf die Räder (11) übertragen.

2. Kraftfahrzeuganhänger nach Anspruch 1, d a d u r c h   g e k e n n z e i c h n e t , daß der aufzunehmende Lastkörper (12), insbesondere ein Boot, auf beiden Längsseiten je eine insbesondere winkelförmige Einbuchtung (14) besitzt, welche auf den beiden oberen Auflagen (9) der seitlichen Radschutzhauben aufliegen.

3. Kraftfahrzeuganhänger nach Anspruch 1 und 2, d a -

44 098
HC/Be

durch gekennzeichnet , daß an dem vorderen parallelen Teil der Deichselrohre (2) eine Stütze (13) befestigt ist, die mit ihrem Oberteil in die Spitze des Lastkörpers (12) greift und dort befestigt ist und zusammen mit den seitlichen Auflagen (14) eine dreipunktartige Übernahme der Last des Aufbaues bildet.

4. Kraftfahrzeuganhänger nach Anspruch 1, d a d u r c h g e k e n n z e i c h n e t , daß an den Querprofilen Dreieckslenker (6) befestigt sind.

5. Kraftfahrzeuganhänger nach Anspruch 4, d a d u r c h g e k e n n z e i c h n e t , daß die an dem vorderen parallelen Teil der Deichselrohre (2) befindliche Stütze (13) durch ihre Befestigung an den Deichselrohren in Fahrtrichtung gegenüber dem Chassis verschiebbar ist.

6. Kraftfahrzeuganhänger nach Anspruch 1 bis 5, d a - d u r c h g e k e n n z e i c h n e t , daß der aufzunehmende Lastkörper (12) durch die Einbuchtungen (14) an den Längsseiten der Aufbauten (12) über eine bestimmte Länge und durch die verschiebbare Anordnung der vorderen Auflage (13) im vorderen parallelen Teil (2) der Deichsel auf den beiden seitlichen Auflagen (9) gegenüber dem Chassis in Fahrtrichtung verschiebbar angeordnet ist.

7. Kraftfahrzeuganhänger nach Anspruch 1 bis 6, d a - d u r c h g e k e n n z e i c h n e t , daß an den seitlichen Auflagen (9) Rollen (15) befestigt sind, die insbesondere in der Höhe verstellbar sind.

8. Kraftfahrzeuganhänger nach Anspruch 1 bis 7, d a - d u r c h g e k e n n z e i c h n e t , daß die Rollen

(15) und die seitlichen Auflagen (9) die gleiche Breite haben, um unterschiedlich ausgestaltete Aufbauten innen oder außen aufzulegen.

9. Kraftfahrzeuganhänger nach Anspruch 1 bis 8, d a - d u r c h   g e k e n n z e i c h n e t , daß an dem vorderen Teil der Deichselrohre (2) ein zusätzliches Rohr befestigbar ist zur Aufnahme von Brems- und Rückfahrvorrichtungen.

10. Kraftfahrzeuganhänger nach Anspruch 1 bis 9, d a - d u r c h   g e k e n n z e i c h n e t , daß, um ein Verrutschen der Last zu verhindern, der Lastkörper (12) an der vorderen Auflage (13) und den seitlichen Auflagen (9) mit Befestigungsvorrichtungen, insbesondere Schnellverschlußverbindungen, befestigt ist.

11. Kraftfahrzeuganhänger nach Anspruch 1 bis 10, d a - d u r c h   g e k e n n z e i c h n e t , daß die Deichselrohre ineinander liegende Rohre aufweisen, um sie durch Heraus- bzw. Hineinschieben unterschiedlich langen Lasten anzupassen.

12. Kraftfahrzeuganhänger nach Anspruch 1 bis 11, d a - d u r c h   g e k e n n z e i c h n e t , daß die Deichselrohre abmontierbar befestigt sind, um sie gegen Deichselrohre mit anderer Länge auszuwechseln.

13. Kraftfahrzeuganhänger nach Anspruch 1 bis 12, d a - d u r c h   g e k e n n z e i c h n e t , daß im hinte- ren Ende der Deichselrohre andere Rohre zur Aufnahme der Endbegrenzung angeordnet sind.

14. Kraftfahrzeuganhänger nach Anspruch 1 bis 13, d a - durch gekennzeichnet, daß Aufbauten oder Lasten, die nicht speziell für das Chassis konstruiert wurden, mittels eines Adapters (17) befestigbar oder aufnehmbar sind.

15. Kraftfahrzeuganhänger nach Anspruch 1 bis 14, da - durch gekennzeichnet, daß auf dem vorderen Teil der Deichsel (2) eine Seilwinde befestigt ist, durch die Lasten auf das Chassis ziehbar sind.

Fig.1

Fig.2

Fig.3

1/6

0162292

Fig.4

Fig.5

Fig.6

Fig.7

A

B

Fig.8

A - B

16

3/6

0 1 62292

0162292

Fig.9
Fig.10
Fig.11
Fig.12
Fig.13
Fig.14
17
Fig.15
Fig.16
Fig.17
Fig.18
Fig.19
Fig.20
Fig.21
Fig.22
Fig.23
Fig.24

Fig. 25

Fig. 26

Fig. 27

0162292

Fig.28

Fig.29

Fig.30

Fig.31

Fig.32

Fig.33

Fig.34

Fig.35

Fig.36

Fig.37

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 004 771 (MOORE) <br> * Spalte 2, Zeilen 17-25; Abbildungen 1,4 * <br><br> --- | 1 | B 62 D 63/06 <br> B 60 P 3/10 <br> B 60 P 1/52 |
| A | US-A-3 584 753 (VOELLER) <br> * Spalte 2, Zeilen 24-30,42-53; Abbildungen 1-4,6 * <br><br> --- | 1 | |
| A | US-A-3 842 998 (BORUM) <br> * Spalte 4, Zeilen 42-47; Abbildung 3 * <br><br> --- | 2 | |
| A | US-A-4 365 923 (LUBBERS) <br> * Spalte 4, Zeilen 12-15; Abbildung 1 * <br><br> ----- | 3,5,15 | |
| | | | **RECHERCHIERTE SACHGEBIETE (Int. Cl.4)** <br><br> B 60 P 1/00 <br> B 60 P 3/00 <br> B 62 D 63/00 |

Der vorliegende Recherchenbericht wurde für alle Patentansprüche erstellt.

| Recherchenort <br> DEN HAAG | Abschlußdatum der Recherche <br> 16-07-1985 | Prüfer <br> OSBORNE J. |
|---|---|---|